# EUROPÄISCHE PATENTSCHRIFT

(11) **EP 1 095 824 B1**
(45) Veröffentlichungstag und Bekanntmachung des Hinweises auf die Patenterteilung: **22.09.2004**
(21) Anmeldenummer: 00116382.3
(22) Anmeldetag: 28.07.2000
(51) Int. Cl.: B60R 21/20

(54) **Insassenschutzvorrichtung eines Fahrzeugs mit einem Airbagmodul**
Vehicle occupant protection device comprising an airbag module
Dispositif de protection des occupants d'un véhicule comportant un module de coussin gonflable

(30) Priorität: 30.10.1999 DE 19952424
(43) Veröffentlichungstag der Anmeldung: 02.05.2001
(73) Patentinhaber: AUDI AG, 85045 Ingolstadt (DE)
(72) Erfinder: Krönes, Walter, 85049 Ingoldstadt (DE); Höhne, Frank, 85051 Ingolstadt (DE); Blattner, Joachim, 63857 Waldaschaff (DE); Dettmer, Alexander, 12359 Berlin (DE); Knoblach, Thomas, 97816 Lohr (DE); Pernikl, Norbert, 36381 Schlüchtern (DE); Sigmund, Thomas, 13595 Berlin (DE)
(74) Vertreter: Engelhardt, Harald

(56) Entgegenhaltungen:
- EP-A- 0 846 600
- DE-A- 19 530 346
- DE-C- 19 617 758
- PATENT ABSTRACTS OF JAPAN vol. 1995, no. 09, 31. Oktober 1995 (1995-10-31) -& JP 07 164986 A (TOYOTA MOTOR CORP), 27. Juni 1995 (1995-06-27)

## Beschreibung

Die Erfindung betrifft eine Insassenschutzvorrichtung eines Fahrzeugs mit einem Airbagmodul nach dem Oberbegriff des Anspruchs 1.

Eine bekannte Insassenschutzvorrichtung eines Fahrzeugs mit einem Airbagmodul, das hinter einem Wandteil angeordnet ist und mindestens einen zusammengefalteten Airbag und mindestens einen Gasgenerator enthält (DE 196 17 758 C1), umfasst eine Austrittöffnung im Wandteil für den sich nach einer Aktivierung entfaltenden Airbag und eine, die Austrittöffnung abdeckende Abdeckkappe, die durch den Druck des sich entfaltenden und nachdrängenden Airbags von einer Geschlossenstellung in eine den Airbagaustritt ermöglichende Freigabeposition abhebbar ist. Weiter ist eine Fangbandhalterung für die Abdeckkappe vorgesehen mit einem Fangband, das einerseits an einer Kappenanbindungsstelle an der abhebbaren Abdeckkappe und andererseits an einer fahrzeugfesten Rückhaltestelle befestigt ist.

Die Abdeckkappe ist hier aus einer die Abdeckkappe umgebenden Airbag-Abdecköffnung aus dem Wandteil herausdrückbar. Zur Vergrößerung dieser Öffnung sind zusätzlich Sollbruchlinien vorgesehen, die sich im Wandteil etwa radial von der Airbagaufnahmeöffnung weg erstrecken.

Die Fangbandanordnung für die Abdeckkappe besteht hier konkret nur aus einem Fangband. Die Bewegung einer herausgedrückten Abdeckkappe erfolgt daher relativ unkontrolliert in dem durch die Fangbandlänge begrenzten Bereich.

JP 716498A beschreibt eine Fangbandhalterung für eine Abdeckkappe mit drei Fangbänder und drei Kappenanbindungsstellen

Aufgabe der Erfindung ist es, eine gattungsgemäße Insassenschutzvorrichtung so weiterzubilden, dass unkontrollierte Bewegungen der durch einen aktivierten Airbag abgehobenen Abdeckkappe reduziert werden.

Diese Aufgabe wird mit den Merkmalen des Anspruchs 1 gelöst.

Gemäß Anspruch 1 ist die Fangbandhalterung als Bifilaranbindung ausgebildet, bei der in einer Draufsicht auf die geschlossene Abdeckkappe zwei Fangbänder zumindest im gespannten Zustand als Winkelschenkel einen Winkel kleiner 180° einschließen dergestalt, dass die Abdeckkappe von der Austrittöffnung abhebbar und mittels der durch die Bifilaranbindung vorgegebenen Zwangsführung in den durch die Winkelschenkel eingeschlossenen Winkelbereich seitlich gezielt wegbewegbar ist.

Durch diese Zwangsführung ist somit eine seitliche Wegschwenkrichtung für die Abdeckkappe vorgegeben. Bei einer geeigneten Wahl dieser seitlichen Wegschwenkrichtung können je nach den Gegebenheiten die Austrittbedingungen für den Airbag verbessert und ungünstige Beeinflussungen der Umgebung durch die abgehobene Abdeckkappe reduziert werden. Die genaue Lage der fahrzeugfesten Rückhaltestellen und der Kappenanbindungsstellen für die beiden Fangbänder und damit der Winkelbereich zwischen den Fangbändern ist an die jeweiligen konkreten Anordnungen anzupassen und zu optimieren. Dabei ist zu beachten, dass sowohl zu kleine als auch zu große Zwischenwinkel zwischen den Fangbändern die gewünschten Zwangsführungseigenschaften für die Abdeckkappe reduzieren können. Es bieten sich daher insbesondere Zwischenwinkel in einem Bereich von ca. 60° bis 140°, vorzugsweise von ca. 120° an.

In einer besonders bevorzugten Ausführungsform nach Anspruch 2 wird vorgeschlagen, dass zwischen den zwei die Winkelschenkel und bifilare Anbindung bildenden Fangbändern ein weiteres drittes Fangband vorzugsweise in der Winkelmitte angeordnet ist. Damit ergibt sich eine verbesserte Abstützung und Führung sowohl für eine wegschwenkende Abdeckkappe als auch für einen austretenden Airbag. Aufgrund der Geometrie der Bifilaranbindung durch die ersten beiden Fangbänder kann das dritte Fangband gemäß Anspruch 3 eine kürzere wirksame Länge aufweisen.

Die Fangbänder werden nach Anspruch 4 relativ breit ausgebildet dergestalt, dass kein Airbagaustritt im Spalt zwischen der wegschwenkenden Abdeckkappe und dem Austrittsöffnungsrand im Bereich der Fangbänder erfolgt, da andernfalls die Kappenbewegung behindert werden könnte. Die Breitseite der Fangbänder ist dabei so ausgerichtet, dass die Fangbänder an der Airbagwand des austretenden Airbags anliegen und diesen in seiner Austrittrichtung führen.

Nach Anspruch 5 ist übliches Airbaggewebe als Fangbandmaterial gut geeignet.

In einer bevorzugten konkreten Ausführungsform nach Anspruch 6 sind die Fangbänder aus einem Lappen, insbesondere aus Airbaggewebe, hergestellt dergestalt, dass sich ausgehend von einem zentralen, mit der Rückseite der Abdeckkappe fest verbindbaren Bereich die zwei oder drei Fangbänder anschließen. An den Enden der Fangbänder schließen sich jeweils Ringbereiche an, die einschlagbar sind und übereinanderliegend zwischen zwei fahrzeugfesten, zentrale Ausnehmungen enthaltenden Klemmteilen ggf. mit die Ringbereiche durchdringenden Verbindungselementen gehalten sind. Dadurch entsteht im Zentrum der übereinanderliegenden Ringbereiche nach der Montage der Fangbänder und der Klemmteile ein Freiraum, der vorteilhaft zur Aufnahme des Airbagmoduls, insbesondere für einen Gasgenerator und einen Diffusor, verwendbar ist. Damit ergibt sich eine kompakte und funktionelle Anordnung.

Je nach der Ausbildung und Lage der Insassenschutzvorrichtung kann es zweckmäßig sein, die Abdeckkappe nach Anspruch 7 durch den nachdrängenden Airbag aus einer Wandteilaussparung herausdrückbar zu gestalten oder die Abdeckkappe nach Anspruch 8 mit dem Wandteil in der Grundstellung durch Sollaufreißlinien zu verbinden.

Bei der erfindungsgemäßen Anordnung ist es nach Anspruch 9 möglich, zur Vergrößerung der durch die Abdeckkappe bestimmten Austrittöffnung und/oder für eine weiter gezielt geführte Ausbreitung des Airbags zusätzlich wenigstens eine Sollbruchlinie am Wandteil vorzusehen, die am Randbereich der durch die Abdeckkappe bestimmten Wandteilöffnung beginnt. Nach einer Aktivierung des Airbags wird somit die Abdeckkappe herausgedrückt oder nach Aufreißen deren Sollaufreißlinien abgehoben und anschließend wird das Wandteil an seinen Sollbruchlinien weiter aufgerissen.

Die durch das Aufreißen des Wandteils entstehenden, klappenförmig öffnenden Wandteile können somit für eine gezielte Führung in die gewünschte Airbagaustrittrichtung herangezogen werden. Zudem kann je nach den Gegebenheiten gemäß Anspruch 10 durch einen solchen aufreißbaren klappenartigen Wandteillappen auch das dritte Fangband realisiert werden.

Nach Anspruch 11 ist die erfindungsgemäße Anordnung besonders geeignet in Verbindung mit einem Lenkradairbag, wobei die Abdeckkappe den auf einen Fahrzeuglenker gerichteten Zentralbereich des Lenkrades bildet. Die Lage der Anbindungsstellen der Fangbänder und deren Länge sind hier so dimensioniert, dass die Abdeckkappe nach der Aktivierung des Airbags zuerst bei noch losen und noch nicht oder wenig zugbelasteten Fangbändern durch den nachdrängenden Airbag etwa in dessen Austrittrichtung abhebbar ist. Anschließend ist dann die Airbagkappe mittels der Fangbandzwangsführung bei zugbelasteten Fangbändern seitlich durch den Freiraum innerhalb des Lenkradkranzes in Richtung Fahrzeugfrontseite wegschwenkbar. Dabei ist die Abdeckkappe von einer etwa vertikal ausgerichteten Grundstellung in eine etwa waagrechte Endstellung überführbar. Nach Anspruch 12 soll dabei der Lenkradkranz nicht berührt werden, um sicherzustellen, dass die Finger eines Fahrzeuglenkers nicht von der Abdeckkappe getroffen werden.

Eine sicherheitstechnisch günstige Bewegung der Abdeckkappe wird nach Anspruch 13 erreicht, wenn bei einer Geradeausstellung des Lenkrads die Abdeckkappe nach oben und zur Fahrzeugfrontseite wegschwenkbar ist. Je nach den fahrzeugspezifischen Gegebenheiten kann die Abdeckkappe auch nach unten oder zur Seite bewegbar sein.

Anhand einer Zeichnung wird die Erfindung näher erläutert.

Es zeigen:
- Fig. 1: eine schematische Seitenansicht einer als Lenkradairbaganordnung ausgebildeten Insassenschutzvorrichtung mit verschiedenen Abhebestellungen einer zentralen Abdeckkappe,
- Fig. 2: eine schematische Draufsicht auf die zentrale Abdeckkappe einer Lenkradairbaganordnung,
- Fig. 3: eine schematische Draufsicht auf die Unterseite einer Abdeckkappe, an der ein Lappen mit drei Fangbändern befestigt ist,
- Fig. 4: eine schematische Draufsicht auf die Unterseite einer Abdeckkappe gemäß Fig. 3 nach einem weiteren Montageschritt, bei dem Funktionsteile angebracht werden,
- Fig. 5: eine schematische Draufsicht auf die Unterseite einer Abdeckkappe gemäß den Fig. 3 und 4 nach einem weiteren Montageschritt, und
- Fig. 6: eine schematische, perspektivische Vorderansicht einer Lenkradairbaganordnung mit einer nach der Aktivierung des Airbags abgehobenen zentralen Abdeckkappe und gespannten, zugbelasteten Fangbändern.

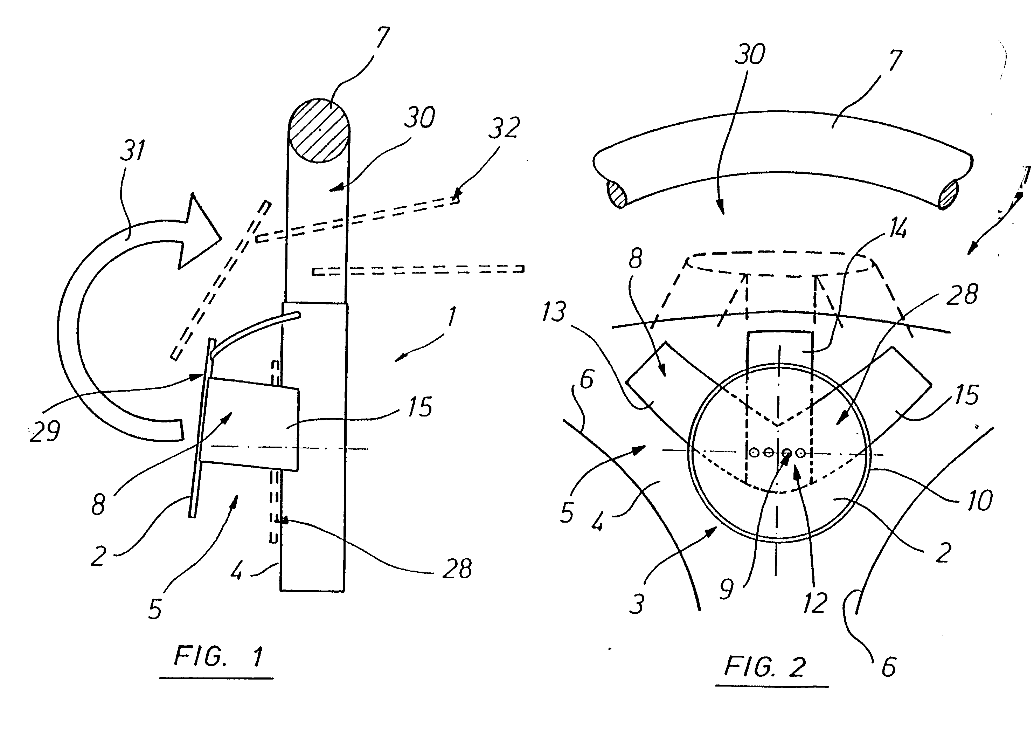

In der Fig. 1 ist schematisch eine Seitenansicht einer als Insassenschutzvorrichtung ausgebildeten Lenkradairbaganordnung 1 mit einer zentralen Abdeckkappe 2 dargestellt. Diese zentrale Abdeckkappe 2 deckt in einem in der Fig. 2 mit durchgezogenen Linien dargestellten, nicht aktivierten Zustand der Lenkradairbaganordnung 1 eine Airbag-Austrittöffnung 3 ab, die in einem Wandteil 4 eines Airbagmoduls 5 ausgebildet ist. Dieses Airbagmodul 5 umfasst wenigstens einen zusammengefalteten Airbag und wenigstens einen Gasgenerator.

Radial erstrecken sich hier lediglich schematisch angedeutete Lenkradspeichen 6 zu einem äußeren Lenkradkranz 7, der in den Fig. 1 und 2 ebenfalls lediglich schematisch und teilweise dargestellt ist.

Wie dies aus den Fig. 1 und 2 weiter ersichtlich ist, umfasst die Lenkradairbaganordnung 1 ferner eine Fangbandhalterung 8 für die Abdeckkappe 2, die einerseits an der Unterseite der Abdeckkappe 2 an einer Kappenanbindungsstelle 9 und andererseits an einer fahrzeugfesten Rückhaltestelle befestigt ist.

Der Fig. 2 kann weiter entnommen werden, dass die zentrale Abdeckkappe 2 mit dem Wandteil 4 des Lenkradnabenbereichs 5 in der nicht aktivierten Grundstellung der Lenkradairbaganordnung 1 durch Sollaufreißlinien 10, z. B. in Form von Materialschwächungen, verbunden ist.

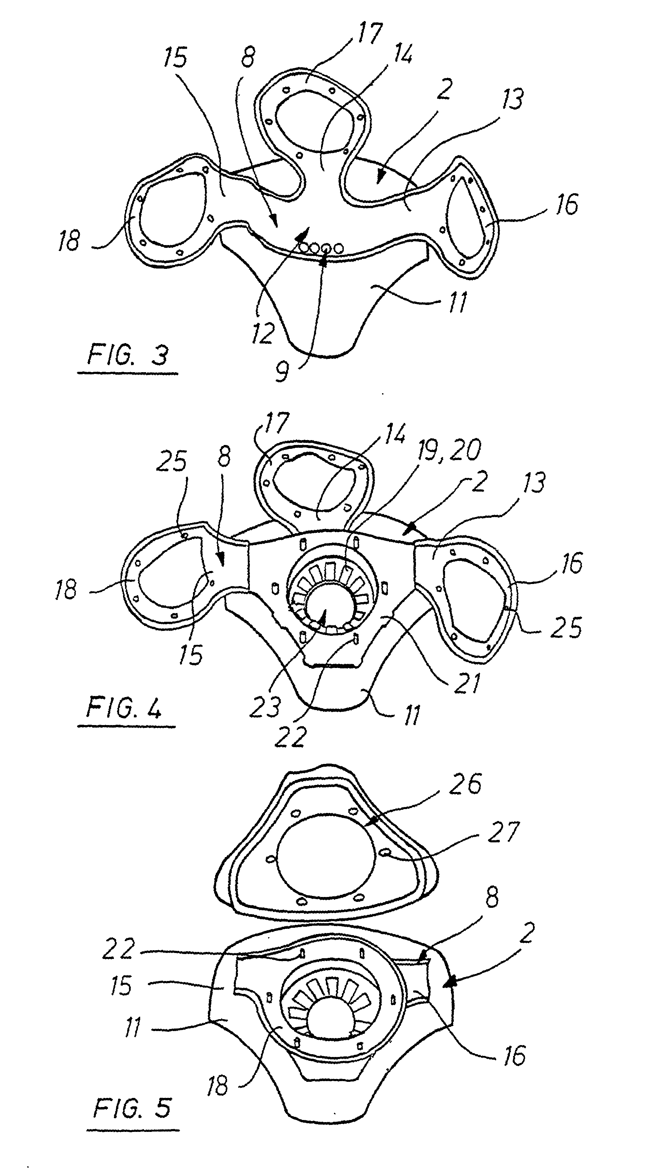

In der Fig. 3 ist eine Draufsicht auf eine Unterseite 11 der zentralen Abdeckkappe 2 gezeigt. Die Fangbandhalterung 8 ist hier an der Kappenanbindungsstelle 9 mit einem zentralen Bereich 12 fest an der Unterseite 11 der Abdeckkappe 2 angebunden. An diesen zentralen Bereich 12 der Fangbandhalterung 8 schließen sich drei Fangbänder 13, 14, 15 an, die an ihren Enden jeweils Ringbereiche 16, 17, 18 aufweisen.

Im Rahmen der Montage der Lenkradairbaganordnung 1 wird in einem weiteren Montageschritt, wie dies in der Fig. 4 schematisch dargestellt ist, auf die Unterseite 11 der Abdeckung ein Diffusor 19 mit einem Airbagpaket 20 auf den zentralen Bereich 12 der Fangbandhalterung 8 aufgesetzt sowie anschließend ein nicht dargestellter Gasgenerator in eine zentrale Aufnahmeöffnung 23 des Diffusors 19 eingesetzt. Anschließend wird ein Haltering 21 als Klemmteil aufgesetzt, der an seiner Rückseite stiftartige Schraubenfortsätze 22 aufweist.

Wie dies aus der Fig. 5 ersichtlich ist, werden in einem darauffolgenden Montageschritt die Ringbereiche 16, 17, 18 der Fangbänder 13, 14, 15, mit darin entsprechend den Schraubenfortsätzen am Haltering 21 ausgebildeten Ringlöchern 25 übereinanderliegend über die Schraubenfortsätze 22 gesteckt. Anschließend kann dann ein als weiteres Klemmteil ausgebildeter äußerer Haltering 26, der ebenfalls entsprechend den Schraubenfortsätzen 22 ausgebildete Ringlöcher 27 aufweist, über die Schraubenfortsätze 22 gesteckt und anschließend fertig montiert mit der zentralen Abdeckkappe 2 werden, was in der Fig. 5 allerdings nicht mehr dargestellt ist.

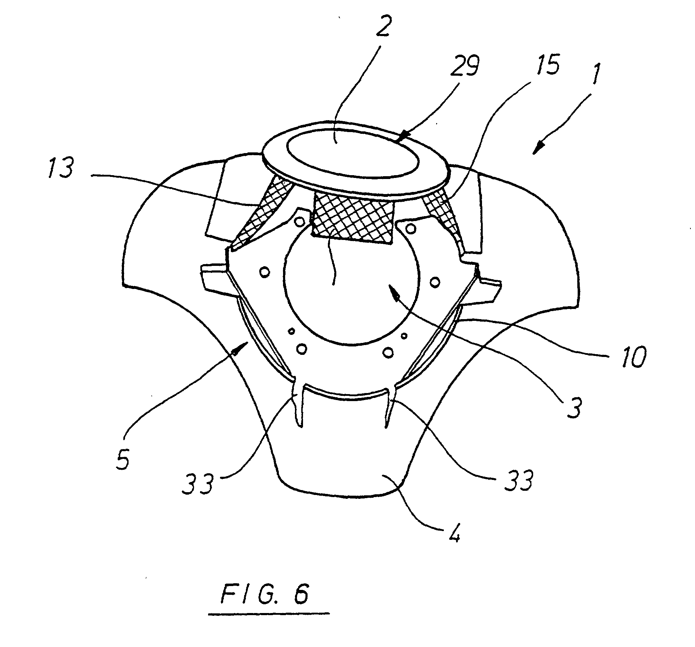

Die Fangbandhalterung 8 ist im wesentlichen als Bifilaranbindung ausgebildet, bei der in einer Draufsicht auf die geschlossene Abdeckkappe, wie dies in der Fig. 2 dargestellt ist, die beiden Fangbänder 13, 15 zumindest im gespannten Zustand als Winkelschenkel einen Winkel von kleiner 180° einschließen. In dem Ausführungsbeispiel ist ein Zwischenwinkel von etwa 120° gewählt. Zwischen diesen beiden, die Bifilaranbindung ausbildenden Fangbändern 13, 15 ist als weiteres Fangband das dritte Fangband 14 angeordnet, womit sich eine verbesserte Abstützung und Führung für ein Wegschwenken der Abdeckkappe und für einen austretenden Airbag ergibt. Die Fangbänder 13, 14, 15 sind dabei relativ breit ausgebildet, um zu vermeiden, dass kein Airbagaustritt im Spalt zwischen einer im aktivierten Zustand wegschwenkenden Abdeckkappe 2 und dem Austrittöffnungsrand im Bereich der Fangbänder 13, 14, 15 erfolgt, wie dies insbesondere aus der Fig. 6 ersichtlich ist.

Die Funktionsweise der Lenkradairbaganordnung 1 wird nachfolgend in Verbindung mit den Fig. 1 und 6 näher erläutert.

In der in der Fig. 1 strichliert eingezeichneten Grundstellung 28 verschließt die Abdeckkappe 2 die Airbagaustrittöffnung 3. Im Falle einer Aktivierung der Lenkradairbaganordnung 1 bläst sich der hinter der zentralen Abdeckkappe 2 angeordnete Airbag auf und übt einen Druck auf die davorliegende Abdeckkappe 2 aus. Durch diesen Druck auf die zentrale Abdeckkappe 2 von deren Unterseite 11 her reißt das Wandteil 4 im Bereich der Sollaufreißlinien 10 ein, wodurch die Abdeckkappe 2 durch den sich weiter entfaltenden und nachdrängenden Airbag von der Grundstellung 28 ausgehend in eine in der Fig. 1 mit durchgezogenen Linien gezeichnete, den Airbagaustritt ermöglichende Freigabeposition 29 abgehoben wird. Die Lage der Anbindungsstelle 9 der Fangbänder 13, 14, 15 und deren Länge ist dabei so dimensioniert, dass die Abdeckkappe 2 nach deren Abheben von der Airbagaustrittöffnung 3 mittels der Fangbandzwangsführung bei zugbelasteten Fangbändern 13, 14, 15 seitlich durch den Freiraum 30 innerhalb des Lenkradkranzes 7 weggeschwenkt wird, wie dies in der Fig. 1 durch den Pfeil 31 und die strichliert eingezeichneten, beispielhaft ausgewählten Schwenkpositionen 32 dargestellt ist.

Der Fig. 6 kann weiter entnommen werden, dass zur Vergrößerung der durch die Abdeckkappe 2 bestimmten Airbagaustrittöffnung 3 und/oder für eine weiter gezielt geführte Ausbreitung des hier nicht dargestellten Airbags zusätzlich weitere Sollbruchlinien 33, z. B. in Form von Materialschwächungen, am Wandteil 4 vorgesehen sind, die am Randbereich der durch die Abdeckkappe 2 bestimmten Austrittöffnung 3 beginnen. Mit derartigen Sollbruchlinien 33 wird erreicht, dass nach einer Aktivierung des Airbags und nach dem Abheben der Abdeckkappe das Wandteil 4 an diesen Sollbruchlinien 33 weiter aufgerissen wird, wodurch die Austrittöffnung 3 weiter vergrößert wird.

## Patentansprüche

1. Insassenschutzvorrichtung eines Fahrzeugs mit einem Airbagmodul,
das hinter einem Wandteil angeordnet ist und mindestens einen zusammengefalteten Airbag und mindestens einen Gasgenerator enthält,
mit einer Austrittöffnung im Wandteil für den sich nach einer Aktivierung entfaltenden Airbag,
mit einer die Austrittöffnung abdeckenden Abdeckkappe, die durch den Druck des sich entfaltenden und nachdrängenden Airbags von einer Geschlossenstellung in eine den Airbagaustritt ermöglichende Freigabeposition abhebbar ist, und
mit einer Fangbandhalterung für die Abdeckkappe mit einem Fangband, das einerseits an einer Kappenanbindungsstelle an der abhebbaren Abdeckkappe und andererseits an einer fahrzeugfesten Rückhaltestelle befestigt ist,
**dadurch gekennzeichnet,**
**dass** die Fangbandhalterung (8) als Bifilaranbindung ausgebildet ist, bei der in einer Draufsicht auf die geschlossene Abdeckkappe (2) zwei Fangbänder (13, 15) zumindest im gespannten Zustand als Winkelschenkel einen Winkel kleiner 180° einschließen dergestalt, dass die Abdeckkappe (2) von der Austrittöffnung (3) abhebbar und mittels der durch die Bifilaranbindung vorgegebenen Zwangsführung in den durch die Winkelschenkel eingeschlossenen Winkelbereich seitlich gezielt wegbewegbar ist.

2. Insassenschutzvorrichtung nach Anspruch 1, **dadurch gekennzeichnet, dass** zwischen den zwei die Winkelschenkel bildenden Fangbändern (13, 15) ein weiteres drittes Fangband (14) angeordnet ist.

3. Insassenschutzvorrichtung nach Anspruch 1 oder Anspruch 2, **dadurch gekennzeichnet, dass** das dritte Fangband (14) gegenüber den anderen beiden Fangbändern (13, 15) eine kürzere wirksame Länge aufweist.

4. Insassenschutzvorrichtung nach einem der Ansprüche 1 bis 3, **dadurch gekennzeichnet, dass** die Fangbänder (13, 14, 15) so breit ausgebildet sind, dass der Airbag dergestalt abstützbar ist, dass kein Austritt eines sich entfaltenden Airbagbereichs zwischen dem Spalt zwischen der Abdeckkappe und dem Austrittöffnungsrand im Bereich der Fangbänder (13, 14, 15) erfolgt.

5. Insassenschutzvorrichtung nach einem der Ansprüche 1 bis 4, **dadurch gekennzeichnet, dass** die Fangbänder (13, 14, 15) aus Airbaggewebe hergestellt sind.

6. Insassenschutzvorrichtung nach einem der Ansprüche 1 bis 5, **dadurch gekennzeichnet,**
**dass** die Fangbänder (13, 14, 15) aus einem Lappen hergestellt sind dergestalt, dass sich ausgehend von einem zentralen, mit der Rückseite der Abdeckkappe fest verbindbaren Bereich (9) die zwei oder drei Fangbänder (13, 14, 15) anschließen,
**dass** sich an den Enden der Fangbänder (13, 14, 15) jeweils Ringbereiche (16, 17, 18) anschließen, die übereinanderliegend zwischen zwei fahrzeugfesten, zentrale Ausnehmungen enthaltenden Klemmteilen (21, 26) gegebenenfalls mit die Ringbereiche (16, 17, 18) durchringenden Verbindungselementen (22) gehalten sind, und
**dass** im Zentrum der Ringbereiche (16, 17, 18) und der Klemmteile (21, 26) ein Freiraum zur Aufnahme des Airbagmoduls (24), insbesondere für einen Gasgenerator (23) und einen Diffusor (19) vorgesehen ist.

7. Insassenschutzvorrichtung nach einem der Ansprüche 1 bis 6, **dadurch gekennzeichnet, dass** die Abdeckkappe (2) durch den nachdrängenden Airbag aus einer Aussparung des Wandteils (4) herausdrückbar ist.

8. Insassenschutzvorrichtung nach einem der Ansprüche 1 bis 6, **dadurch gekennzeichnet, dass** die Abdeckkappe (2) mit dem Wandteil (4) in der Grundstellung (28) durch Sollaufreißlinien (10) verbunden ist.

9. Insassenschutzvorrichtung nach Anspruch 7 oder Anspruch 8, **dadurch gekennzeichnet, dass** zur Vergrößerung der Austrittöffnung (3) und/oder eine gezielte Ausbreitung für den Airbag zusätzlich wenigstens eine Sollbruchlinie (33) am Wandteil (4) vorgesehen ist, die am Randbereich der durch die abhebbare Abdeckkappe (2) bestimmten Austrittöffnung (2) beginnt.

10. Insassenschutzvorrichtung nach Anspruch 8, **dadurch gekennzeichnet, dass** das dritte Fangband (14) als durch Sollbruchlinien begrenzter, aufreißbarer Wandteillappen ausgebildet ist.

11. Insassenschutzvorrichtung nach einem der Ansprüche 1 bis 10, **dadurch gekennzeichnet,**
**dass** die Insassenschutzvorrichtung eine Lenkradairbaganordnung (1) ist mit einer zentralen Abdeckkappe (2), und
**dass** die Lage der Anbindungsstellen (9) der Fangbänder (13, 14, 15) und deren Länge so dimensioniert sind, dass die Abdeckkappe (2) nach der Aktivierung des Airbags zuerst bei losen, noch nicht oder wenig zugbefasteten Fangbändern (13, 14, 15) durch den nachdrängenden Airbag etwa in dessen Austrittrichtung abhebbar ist und dass die Airbagkappe (2) anschließend mittels der Fangbandzwangsführung bei zugbelasteten Fangbändern (13, 14, 15) seitlich durch den Freiraum (30) innerhalb des Lenkradkranzes (7) wegschwenkbar ist.

12. Insassenschutzvorrichtung nach Anspruch 11, **dadurch gekennzeichnet, dass** die Airbagkappe (2) dergestalt durch den Freiraum (30) wegschwenkbar ist, dass der Lenkradkranz nicht berührt wird.

13. Insassenschutzvorrichtung nach Anspruch 11 oder Anspruch 12, **dadurch gekennzeichnet, dass** die Lage der Anbindungsstellen (9) der Fangbänder (13, 14, 15) so gewählt ist, dass bei einer Geradeausstellung des Lenkrads die Abdeckkappe (2) nach oben und zur Fahrzeugfrontseite bewegbar ist.

## Claims

1. Vehicle occupant protection device, comprising an airbag module disposed behind a wall section and containing at least one folded airbag and at least one gas generator, with an outlet in the wall section from which the expanding airbag can emerge upon activation,
with a cap which covers the outlet and can be raised by the pressure of the expanding airbag from a closed position into a released position allowing the airbag to emerge, and
with a catch-strap holder for the covering cap having a catch strap, which is fastened at one end to an attachment point on the removable cap and at the other end to a retaining point fixed to the vehicle,
**characterized in that**
the catch-strap holder (8) takes the form of a bifilar attachment, in which case, in a top view of the closed cap (2), two catch straps (13, 15), at least in their taut state as an angled member, form an angle of less than 180° in such a way that the covering cap (2) can be raised from the outlet (3) and purposely moved away to the side, with guidance as predetermined by the bifilar attachment, into the angular region enclosed by the angled member.

2. Vehicle occupant protection device according to Claim 1, **characterized in that** an additional third catch strap (14) is disposed between the two catch straps (13, 15) forming the angled member.

3. Vehicle occupant protection device according to Claim 1 or Claim 2, **characterized in that** the third catch strap (14) has a shorter effective length than the other two catch straps (13, 15).

4. Vehicle occupant protection device according to one of Claims 1 to 3, **characterized in that** the catch straps (13, 14, 15) are of such a width that the airbag can be supported so that there is no emergence of an unfolding portion of airbag from the gap between the covering cap and the edge of the outlet in the region of the catch straps (13, 14, 15).

5. Vehicle occupant protection device according to one of Claims 1 to 4, **characterized in that** the catch straps (13, 14, 15) are made of airbag fabric.

6. Vehicle occupant protection device according to one of Claims 1 to 5, **characterized in that**
the catch straps (13, 14, 15) are made from one piece of fabric so that the two or three catch straps extend from a central portion (9) which can be firmly attached to the rear side of the covering cap,
**in that** ring-shaped portions (16, 17, 18) follow on from the ends of each catch strap (13, 14, 15), these being held one on top of the other between two clamping components (21, 26) which are fixed to the vehicle and have central recesses, possibly with connecting elements (22) passing through the ring-shaped portions (16, 17, 18), and
**in that** in the centre of the ring-shaped portions (16, 17, 18) and of the clamping components (21, 26), a free space is provided for accommodating the airbag module (24), in particular for a gas generator (23) and a diffusor (19).

7. Vehicle occupant protection device according to one of Claims 1 to 6, **characterized in that** the covering cap (2) can be pushed out from a recess in a wall section (4) by the emerging airbag.

8. Vehicle occupant protection device according to one of Claims 1 to 6, **characterized in that**, in the normal position (28), the covering cap (2) is attached to the wall section (4) by lines (10) having predetermined breaking points.

9. Vehicle occupant protection device according to Claim 7 or Claim 8, **characterized in that**, for purposes of enlarging the outlet (3) and/or for a specific widening of said outlet for the airbag, at least one line (33) having a predetermined breaking point is additionally provided on the wall section (4), said line (33) beginning in the region of the edge of the outlet (3) as defined by the removable covering cap (2).

10. Vehicle occupant protection device according to Claim 8, **characterized in that** the third catch strap (14) takes the form of a tearable strip of fabric on the wall section, said strip being defined by lines with predetermined breaking points.

11. Vehicle occupant protection device according to one of Claims 1 to 10, **characterized in that**
the vehicle occupant protection device is a steering wheel airbag arrangement (1) with a central covering cap (2), and
**in that** the position of the attachment points (9) of the catch straps (13, 14, 15) and their length are such that the covering cap (2) can be raised following activation of the airbag, with the catch straps (13, 14, 15) initially being slack, i.e. having no tensile load or at least only a slight tensile load, by the pressure of the airbag acting substantially in its direction of emergence,
and **in that** the airbag cap (2) can then be swung away sideways through the free space (30) within the steering wheel ring (7), its movement being guided by the tensile loading of the catch straps (13, 14, 15).

12. Vehicle occupant protection device according to Claim 11, **characterized in that** the airbag cap (2) is swivelled away through the free space (30) in such a way as not to come into contact with the steering wheel ring.

13. Vehicle occupant protection device according to Claim 11 or Claim 12, **characterized in that** the position of the attachment points (9) of the catch straps (13, 14, 15) is such that, when the steering wheel is in the position for driving straight forward, the covering cap (2) can be moved upwards and towards the front of the vehicle.

## Revendications

1. Dispositif de protection d'occupants d'un véhicule, avec un module de coussin à gaz,
qui est disposé derrière un élément de paroi, et qui comporte au moins un coussin à gaz replié et au moins un générateur de gaz,
avec un orifice de sortie pratiqué dans l'élément de paroi pour le coussin à gaz se déployant après une activation,
avec un couvercle recouvrant l'orifice de sortie qui, par la pression du coussin à gaz se déployant et poussant derrière, peut être déplacé d'une position de fermeture dans une position de libération permettant la sortie du coussin à gaz, et
avec une retenue à bande de garde pour le couvercle, comportant une bande de garde qui est fixée, d'une part en un point d'attache du couvercle relevable, et d'autre part en un point de retenue solidaire du véhicule,
**caractérisé en ce que**
la retenue (8) à bande de garde est agencée sous la forme d'une attache bifilaire dans le cas de laquelle, sur une vue de dessus du couvercle (2) fermé, deux bandes de garde (13, 15) incluent en tant que branches d'angle un angle inférieur à 180°, au moins à l'état tendu, de telle sorte que, au moyen du guidage forcé prédéterminé par l'attache bifilaire, le couvercle (2) puisse être soulevé de l'orifice de sortie (3) et déplacé latéralement de façon ciblée dans la zone angulaire formée par les branches d'angle.

2. Dispositif de protection d'occupants selon la revendication 1, **caractérisé en ce qu'**une troisième bande de garde (14) supplémentaire est disposée entre les deux bandes de garde (13, 15) formant les branches d'angle.

3. Dispositif de protection d'occupants selon la revendication 1 ou la revendication 2, **caractérisé en ce que**, par rapport aux deux autres bandes de garde (13, 15), la troisième bande de garde (14) présente une longueur active plus courte.

4. Dispositif de protection d'occupants selon l'une quelconque des revendications 1 à 3, **caractérisé en ce que** les bandes de garde (13, 14, 15) sont agencées avec une largeur telle que le coussin à gaz puisse être soutenu, de telle sorte qu'une sortie d'une zone du coussin à gaz se déployant n'ait pas lieu par la fente située entre le couvercle et le bord de l'orifice de sortie dans la zone des bandes de garde (13, 14, 15).

5. Dispositif de protection d'occupants selon l'une quelconque des revendications 1 à 4, **caractérisé en ce que** les bandes de garde (13, 14, 15) sont réalisées dans le tissu de coussin à gaz.

6. Dispositif de protection d'occupants selon l'une quelconque des revendications 1 à 5, **caractérisé en ce que**
les bandes de garde (13, 14, 15) sont réalisées à partir d'une patte, de telle sorte que les deux ou trois bandes de garde (13, 14, 15) se raccordent à partir d'une zone centrale (9) pouvant être reliée solidairement à la face arrière du couvercle,
des zones annulaires (16, 17, 18) se raccordent respectivement aux extrémités des bandes de garde (13, 14, 15), lesquelles, situées les unes au-dessus des autres, sont retenues par des éléments de liaison (22), qui traversent le cas échéant les zones annulaires (16, 17, 18), entre deux éléments de serrage (21, 26) solidaires du véhicule comportant des évidements centraux, et
un espace libre pour la réception du module de coussin à gaz (24), notamment pour un générateur de gaz (23) et un diffuseur (19), est prévu au centre des zones annulaires (16, 17, 18) et des éléments de serrage (21, 26).

7. Dispositif de protection d'occupants selon l'une quelconque des revendications 1 à 6, **caractérisé en ce que** le couvercle (2) peut être refoulé hors d'un évidement de l'élément de paroi (4) par la poussée du coussin à gaz.

8. Dispositif de protection d'occupants selon l'une quelconque des revendications 1 à 6, **caractérisé en ce que**, dans la position de base (28), le couvercle (2) est relié à l'élément de paroi (4) par des lignes de déchirure prédéterminées (10).

9. Dispositif de protection d'occupants selon la revendication 7 ou la revendication 8, **caractérisé en ce que**, pour l'agrandissement de l'orifice de sortie (3) et/ou pour un déploiement cible du coussin à gaz, au moins une ligne de rupture prédéterminée (33) supplémentaire est prévue sur l'élément de paroi (4), qui commence au niveau de la zone de bord de l'orifice de sortie (2) défini par le couvercle (2) relevable.

10. Dispositif de protection d'occupants selon la revendication 8, **caractérisé en ce que** la troisième bande de garde (14) est agencée sous la forme d'une patte d'élément de paroi pouvant être déchirée, qui est délimitée par des lignes de rupture prédéterminée.

11. Dispositif de protection d'occupants selon l'une quelconque des revendications 1 à 10, **caractérisé en ce que**
le dispositif de protection d'occupants est un système de coussin à gaz (1) de volant avec un couvercle central (2), et
la position des points d'attache (9) des bandes de garde (13, 14, 15), et leur longueur, sont dimensionnées de telle sorte que, après l'activation du coussin à gaz, le couvercle (2) peut être soulevé par la poussée du coussin à gaz approximativement dans la direction de sortie de ce dernier, dans un premier temps à l'état lâche non encore sollicité ou peu sollicité en traction des bandes de garde (13, 14, 15), et que, au moyen du guidage forcé des bandes de garde, à l'état sollicité en traction des bandes de garde (13, 14, 15), le couvercle (2) du coussin à gaz peut ensuite pivoter latéralement à travers l'espace libre (30) à l'intérieur de la couronne de volant (7).

12. Dispositif de protection d'occupants selon la revendication 11, **caractérisé en ce que** le couvercle (2) du coussin à gaz peut être pivoté à travers l'espace libre (30) de telle sorte que la couronne de volant ne soit pas touchée.

13. Dispositif de protection d'occupants selon la revendication 11 ou la revendication 12, **caractérisé en ce que** la position des points d'attache (9) des bandes de garde (13, 14, 15) est choisie de telle sorte qu'en position du volant pour une marche en ligne droite, le couvercle (2) puisse être déplacé vers le haut et vers la face frontale du véhicule.
